# EUROPEAN PATENT SPECIFICATION

(11) **EP 0 491 650 B1**
(45) Date of publication and mention of the grant of the patent: **10.05.1995**
(21) Application number: 91630114.6
(22) Date of filing: 19.12.1991
(51) Int. Cl.: B29C 70/44, B29C 33/46, B29C 33/40

(54) **Conformal composite molding**
Anpassungsfähige Formgebung von Verbundwerkstoffen
Moulage conformable pour composites

(30) Priority: 19.12.1990 US 629909
(43) Date of publication of application: 24.06.1992
(73) Proprietor: UNITED TECHNOLOGIES CORPORATION, Hartford, CT 06101 (US)
(72) Inventor: Boustead, Terry Martin, New Haven, Connecticut 06513 (US); Vallier, Paul Albert, Kensington, Connecticut 06037 (US)
(74) Representative: Schmitz, Jean-Marie

(56) References cited:
- EP-A- 0 233 134
- EP-A- 0 319 449
- DE-A- 1 629 479
- FR-A- 1 012 578
- FR-A- 2 343 574
- US-A- 3 479 666
- US-A- 3 764 641

## Description

The present invention concerns a resin transfer molding apparatus according to the precharacterizing portion of claim 1 and a method for resin transfer molding composite articles according to the precharacterizing portion of claim 8.

Resin transfer molding is a process wherein resin is injected under pressure into a rigid mold cavity which contains reinforcement fibers. The fibers are tightly packed into the cavity and are saturated or wetted by the resin while the rigid mold halves define the surface contours of the part being formed.

The primary advantage of this process resides in its potential for high rate production, however, use has typically been limited to low-strength components of simple geometry (relative to aerospace components). Difficulties associated with stabilizing and compacting the fibrous preform, loading the same into the mold cavity, maintaining adequate tolerances, and sealing the mold apparatus have been the cause for such limited use.

Specifically with regard to molding aerospace structures, the aforementioned difficulties often yield misoriented fibers, areas which are resin rich or lean depending upon bulk variations of a preform assembly, or porosity, which greatly diminish the specific strength of the component. Furthermore, due to process and material costs, rejection of a single part will, in many instances, negate the cost savings initially sought through resin transfer molding.

The difficulties associated with the resin transfer molding process typically lead to the use of more conventional manufacturing approaches such as vacuum molding or matched metal molding of pre-impregnated composite fabric. These methods which involve the lay-up of resin impregnated composite laminates into a mold cavity or over a mold surface and subsequent compaction are low risk in comparison to resin transfer molding. While vacuum molds are more forgiving of laminate bulk variation, matched metal molds are more accurate in locating integral details such as stringer and bulkhead structures. Both vacuum molding and matched metal molding, however, require the labor intensive task of laying-up composite laminates on a ply-by-ply basis thus making both methods poorly suited for high rate production.

A more recent development in the composite molding art is described in the EP-A-0 319 449. A fluoroelastomer material is combined with fiber reinforcement to form a semi-rigid mold half, which functionally serves as the flexible membrane in a vacuum molding process. The advanced flexible membrane is far tougher than the previously used silicone bladders and is semi-rigid for enhancing the dimensional stability of the articles produced thereby. Accordingly, the semi-rigid tooling approach exhibits the best attributes of both vacuum and matched metal molding process.

The FR-A-2 343 574 describes an element of a mold (cf. the preamble of claim 1) for an injection molding process (cf. the preamble of claim 8), said element comprising a rigid support covered with a deformable envelope conforming to the shape of the article to be molded.

The resin transfer molding apparatus of the present invention is defined in claim 1 and the method for resin transfer molding composite articles is defined in claim 8.

This invention describes an apparatus and method for resin transfer molding high strength fiber reinforced composite articles. It is especially applicable to the molding of articles which by their design would become locked onto a rigid mold once cured, such as articles having a reverse flange.

The invention utilizes a rigid mold half, typically made of metal, and a compliant mold half of shaped, reinforced, elastomeric material. The compliant mold half is made rigid or flexible by pressure transferred through a flowable media which supports said mold half during the lay-up and molding operations. After the article is cured, a vacuum is drawn on the flowable media, causing the compliant mold half to collapse and release the article.

A pressure balancing reservoir which stores the flowable media is located behind the compliant mold half. The pressure supporting the compliant mold half can be continuously varied to suit the molding process being used.

A feature of the compliant mold half is that it is forgiving towards laminate bulk variations and thereby facilitates closure of the rigid mold half to the compliant mold half after loading with fiber preform material.

Another feature is that the compliant mold half provides for the accurate location of integral details in the molded part.

Yet another feature is the provision of a compliant mold half which may be discarded after a curing operation.

Still another feature is the capability of producing high strength composite components at high rates and low cost.

The foregoing and other features and advantages of the present invention will become more apparent from the following description and accompanying drawings.

Fig. 1 shows a cross section of the prior art tooling required to form an article having a reverse flange.

Fig. 2 shows a cross section of an assembly of a rigid mold half and the compliant mold half of this invention.

Fig. 3A is a cross section illustrating the compliant mold half's ability to facilitate the insertion of reinforcement.

Fig. 3B is a cross section illustrating the loading of fiber reinforcement into a reverse flange.

Fig. 3C is a cross section illustrating the loading of fiber reinforcement into a detail channel.

Fig. 4 is a cross section illustrating a compliant mold half accommodating bulk reinforcement material to facilitate closing the mold.

Fig. 5 shows a cross section of a compliant mold half with an integrally molded "O" ring seal.

Fig. 5A is a close-up of the integrally molded "O" ring seal shown in Fig. 5.

Fig. 6 is a cross-sectional illustration of the collapse of a compliant mold half to facilitate release of a molded article.

Fig. 7 shows a cross section of a disposable thermoplastic liner in a compliant mold half.

A useful and exemplary embodiment of the present invention is used to manufacture an article having a reverse flange which would be locked onto a rigid mold after cure if conventionally molded.

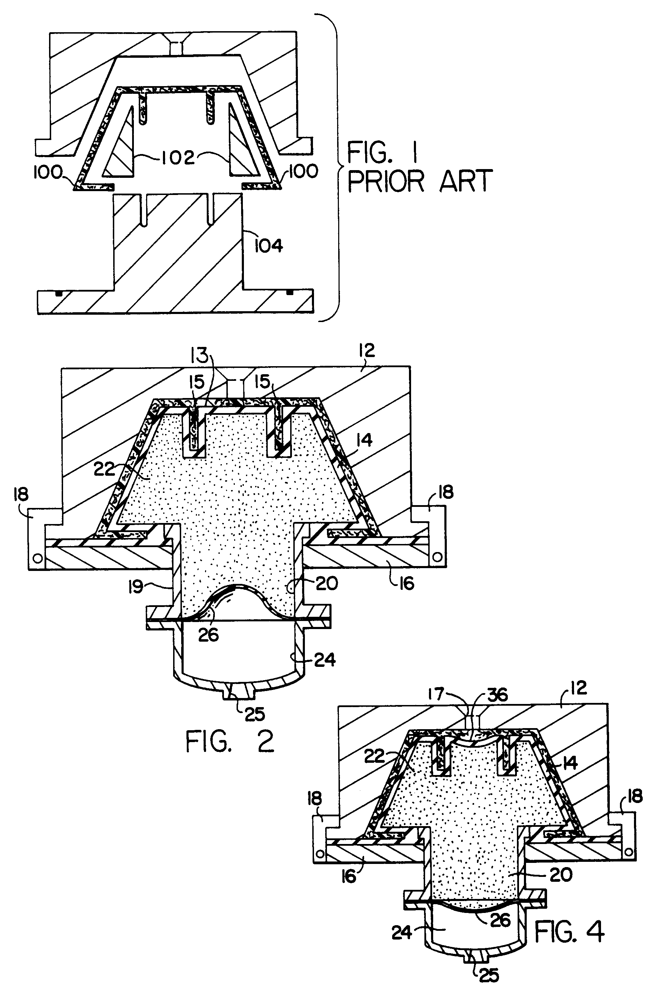

Referring to Fig. 1, prior art tooling used in the molding of complex composite articles having reverse flanges 100 required removable mandrels 102 to release articles from the rigid mold 104 after cure. In contrast, the compliant mold half of this invention does not require removable parts to release a molded article.

Referring now to Fig. 2, there is shown a rigid mold half 12, typically made of metal, and a compliant variably-rigid device 14 for the other mold half. Formed into the front side, or upper surface, 13 of the compliant mold half are channels 15 for locating stiffening inserts. The rigid mold half 12 in this application is made of steel by conventional welding and machining methods.

The compliant mold half in our specific application is fabricated according to the method described in EP-A-0 319 449.

The compliant mold half 14 is made by laminating elastomer impregnated fiber over a model or pattern approximating the shape of the part to be molded and then curing. In this application the elastomer is a fluoroelastomer, such as Fluorel™ elastomer supplied by 3M Company (St. Paul, MN) or Viton™ fluoroelastomer manufactured by E. I. DuPont DeNemours (Wilmington, DE). Although fluoroelastomers are preferred due to their inertness and high use temperatures, other materials such as silicone, neoprene or nitrile rubbers may be acceptable substitutes. Polyaramid fibers and fabric such as Kevlar®, also available from DuPont, are the preferred reinforcement fibers for the invention because of their high tear strength and high tensile modulus. However, other fibers could be used, such as graphite or glass fibers.

The fluoroelastomer is dissolved in a suitable solvent such that there is no fluoroelastomer precipitate and that higher weight polymers are not left undissolved. Methyl ethyl ketone (2-butanone) and toluene (methylbenzene) are preferred solvents, but typically any alkyl aromatic solvent can be used. Typically, about 80% by volume to about 99% by volume of solvent is used. Preferably, the fluoroelastomer solution comprises about 90% to about 95% by volume solvent. The solvent serves two functions. It dissolves the fluoroelastomer allowing impregnation and also washes any residues from the fibers.

Typically, the fluoroelastomer solution is coated onto a fabric, which is a plurality of interwoven bundles of fibers. For this application, each bundle typically comprises 6000 fibers. Typical fabrics used have between 10 and 15 bundles per 2.5 cm (1inch) in the warp and fill directions. The fluoroelastomer solution may be applied to the fabric in a variety of ways. For example, the fluoroelastomer solution could be brushed onto the fabric, or a series of rollers could be used to roll the fabric through a trough to coat the fluoroelastomer solution onto the fabric.

Once the polyaramid fabric is completely impregnated by the fluoroelastomer solution, the solvent is evaporated using conventional methods. The solvent is either flashed off at elevated temperatures (but below that required to cure the fluoroelastomer) or evaporated at room temperature over a longer period of time. All solvent should be evaporated from the fluoroelastomer before fabricating the compliant mold half to avoid solvent vaporization during the cure process, which can cause failure of the material.

A model or pattern is constructed to match the shape of the desired finished article. Impregnated fabric is then laid up over the model or pattern. After initial laminates are laid-up on said model or pattern, additional reinforcing material is included about the detail structures to add rigidity in those areas. A vacuum bag is then used to draw down the elastomer plies to ensure precise formation around the detail structures. After compaction, the lay-up is cured to form a tool. The cure process takes place in two phases, cure and post cure. The cure phase typically takes place in an autoclave at 149-2O4°C (300-400°F), at 0.68-1.38 MPa (100-200 psi) pressure, for 3-5 hours. The post curing phase is typically at 204-260°C (400-500°F)for about 8-10 hours at atmospheric pressure with no restraint.

Prior to use, the compliant mold half is conditioned to prevent sticking of the mold to the molded article. A mold-release agent, such as MS-142, available from Miller Stevenson Co. (Danbury, CT) is applied to the compliant mold half and baked for 2 hours at 177°C (350°F).

Additional units of this compliant mold half are easily and inexpensively duplicated to support increased productivity.

Supporting the compliant mold half is a backer plate 16, which in conjunction with clamp 18 allows the two mold halves to be clamped together.

Attached to the base of the compliant mold half 14 is a pipe-like extension 19 which forms a reservoir 20 to contain a flowable media 22 which transmits pressure to the back side of the compliant mold 14 to vary said mold's degree of rigidity. The flowable media used in this application was X5-8023 Compressible Silicone Rubber, which is available from Dow Corning (Midland, MI) and was used in accordance with the process disclosed in the U.S. Patent Application, Serial Number 201,345 for "Molding Method and Apparatus Using A Solid, Flowable, Polymer Medium", filed on February 13, 1986 and commonly owned herewith. Any material capable of providing a fluid pressure to support the compliant mold half under the required temperature and pressure conditions may be used. This is includes oils, hydraulic fluids and gases.

A diaphragm 26 made of an inert elastomer is disposed between the reservoir 20 and a pressure chamber 24 which is connected at inlet 25 to an external supply of vacuum or pressure. The diaphragm is preferably made from silicone rubber, although other elastomer materials, such as neoprene or nitrile rubber may be used. Pressure applied to the chamber will cause the diaphragm to flex and press the flowable media behind the compliant mold half. A vacuum drawn on the chamber causes the diaphragm to invert and draw flowable media from the compliant mold half, causing said mold half to collapse and pull away from the part which has been molded. If other materials are used to provide support to the compliant mold half, the described diaphragm may not be required.

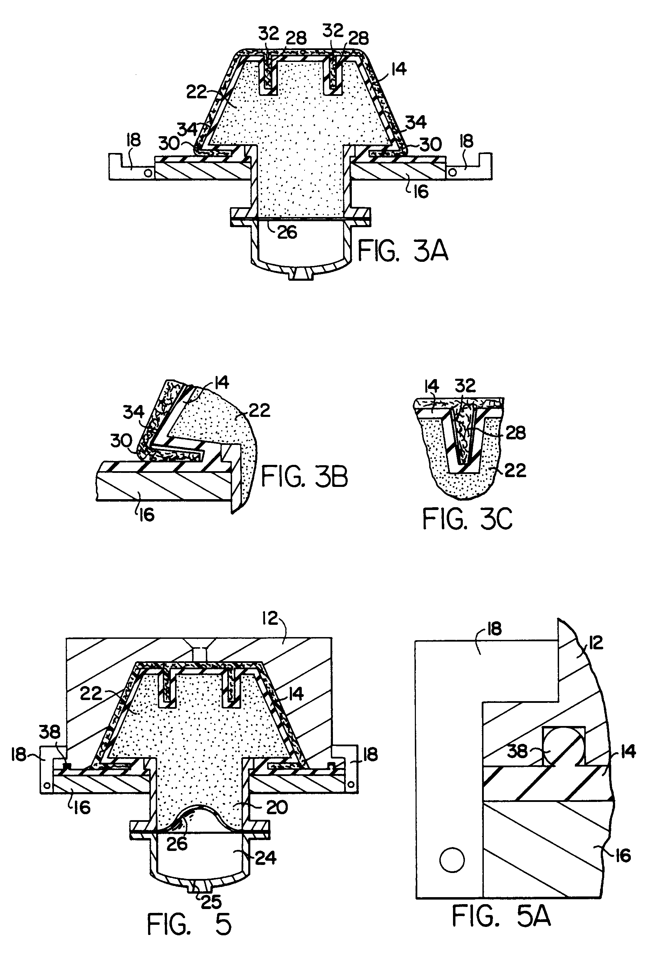

Referring now to Figures 3A,3B, and 3C, at the start of the molding process, prior to the placement of reinforcement or lay-up operation, the flowable media 22 in the compliant mold half 14 is lightly pressurized in order to give the compliant mold half 14 some rigidity and shape. Lay-up of stiffening ribs 28 and reverse flanges 30 in the part is facilitated by prying open the slots 32 and sides 34 of the compliant mold and inserting fiber reinforcement therein. The rigidity of the compliant mold is increased to facilitate lay-up of reinforcement fiber sheet by increasing the pressure behind the flowable media 22.

Referring to Fig. 4, after the lay-up operation is complete, the rigid mold half 12 is closed to the compliant half 14. Excess bulk 36 in the reinforcement is accommodated by the compliant mold half 14 and the mold is closed with ease. After the mold is closed, resin is injected into the mold cavity through a gate 17 to wet and blend with the reinforcement fabric. The pressure behind the compliant mold half can be continuously varied to suit the molding process being used. A feature of this invention is that the pressure supporting the compliant mold half is essentially the same as that of the pressurized resin. There is minimal pressure differential so as not to cause the compliant mold to expand beyond its desired form, nor to cause the compliant mold to distort under resin pressure.

Heat and pressure are conventionally applied to cure the pre-impregnated fabric to form a composite. During the cure operation the insulating attribute of the flowable media 22 tends to contain the heat applied through the rigid mold half 12 within the article rather than conduct it off through what would normally be a metal mold.

Referring to Figs. 5 and 5A, where vacuum or pressure resin injection is being used, a required "O" ring seal 38 can easily be molded in as a part of the compliant mold half 14, eliminating one sealing surface and reducing potential leaks.

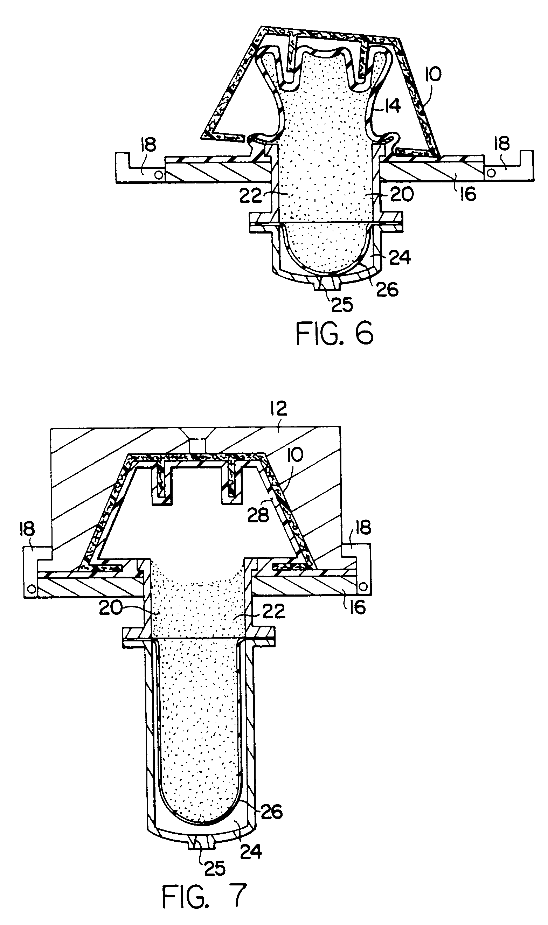

Referring now to Fig. 6, a cured article 10 which would normally be locked onto a rigid mold is removed by drawing a vacuum on the pressure chamber 24 causing the diaphragm 26 to invert, drawing flowable media 22 into the reservoir 20, collapsing the compliant mold half 14 to release the complex article 10.

Fig. 7 illustrates an alternative method of construction for a semi-rigid tool. A thermoplastic disposable liner 28 composed of materials such as ABS which become flexible when heated is substituted for the elastomeric material. In this application, the reservoir would be sufficiently large to completely evacuate flowable media 22 from the interior of the compliant mold half to enable changing of the liner between moldings.

Ideally, for maximum productivity, lay-up of reinforcement should take place on a duplicate of one mold half while another part is being cured between matched molds. Duplication of semi-rigid mold halves is simple and economical compared with the expensive machining required for metal molds.

Although this invention has been shown and described with respect to detailed embodiments thereof, it will be understood by those skilled in the art that various changes in form and detail thereof may be made without departing from the scope of the claimed invention.

## Claims

1. A resin transfer molding apparatus for making a fiber reinforced composite article comprising:
two mold halves (12, 14) mating along a sealing surface to thereby form a mold cavity defining the surfaces of a complex fiber reinforced composite article, characterized by one of said mold halves (14) being for the lay-up of reinforcement fiber thereupon, said one of said mold halves (14) being a compliant and variably rigid device including an elastomeric layer essentially matching the desired shape of said article; and
means (20, 22, 26) to transmit fluid pressure support to said compliant mold half (14) said means (20,22,26) comprising a material (22) capable of providing fluid pressure behind said compliant mold (14) to support the compliant mold half (14), a diaphragm (26) which transmits pressure from an external source to said material, and a reservoir (20) which stores said material when said mold is made nonrigid to facilitate lay-up, molding and removal of the composite article.

2. The apparatus of claim 1 characterized in that the elastomeric layer has means to accurately locate integrally molded stiffening and reinforcing details.

3. The apparatus of claim 1 characterized in that the elastomeric layer is comprised of a polyaramid fabric substantially impregnated by a fluoroelastomer material.

4. The apparatus of claim 1 characterized in that said material (22) is a flowable polymer media.

5. The apparatus of claim 1 characterized in that the compliant mold half (14) has an integrally molded "O" ring seal (38).

6. A resin transfer molding apparatus according to claim 1 characterized by having a compliant mold half (14) whose stiffness can be varied by the application of pressure behind said mold half (14) by said material (22), said mold half (14) facilitates the molding and release of complex composite articles which would otherwise become locked onto the mold after curing.

7. A resin transfer molding apparatus according to claim 1 characterized by having a compliant mold half (14) which is comprised of a disposable thermoplastic liner, said liner becoming flexible when heated during a curing operation, and which can be discarded after the curing operation.

8. A method for resin transfer molding composite articles, using a molding apparatus characterized in that said molding apparatus comprises a compliant mold half (14) whose stiffness can be varied by the application of pressure behind said mold half (14) by a material (22) capable of providing fluid pressure to support the compliant mold half (14), and characterized in including the steps of:
providing pressure behind said compliant mold half (14) to provide a partially rigid structure prior to lay-up of reinforcements;
closing a rigid mold half (12) to said compliant mold half (14);
increasing pressure behind said compliant mold half (14) to provide rigid support during the resin molding process;
and decreasing pressure behind said compliant mold half (14) after the article has been cured to facilitate removal of the part from the mold.

9. The method of claim 8 characterized in that the composite articles have integrally molded reinforcements and reinforcement material is placed onto said compliant mold half (14) prior to closing the rigid mold half (12).

10. The method of claim 8 characterized in that the pressure to provide support to the compliant mold half (14) during the resin molding process is essentially the same as the pressure of the injected resin.

## Patentansprüche

1. Harzspritzpreßvorrichtung zum Herstellen eines faserverstärkten Verbundgegenstands, mit:
zwei Formwerkzeughälften (12, 14), die längs einer Dichtfläche zusammenpassen, um dadurch einen Formwerkzeughohlraum zu bilden, der die Oberflächen eines komplexen, faserverstärkten Verbundgegenstands festlegt, dadurch gekennzeichnet, daß eine der Formwerkzeughälften (14) zum Auflegen der Faserverstärkung auf dieselbe vorgesehen ist, wobei die eine der Formwerkzeughälften (14) eine nachgiebige und variabel starre Vorrichtung ist, die eine elastomere Schicht aufweist, welche der gewünschten Form des Gegenstands im wesentlichen angepaßt ist; und
daß eine Einrichtung (20, 22, 26) vorgesehen ist zum Übertragen von Fluiddruck zum Abstützen der nachgiebigen Formwerkzeughälfte (14), wobei diese Einrichtung (20, 22, 26) ein Material (22) aufweist, das in der Lage ist, Fluiddruck hinter der nachgiebigen Formwerkzeughälfte (14) zu liefern, um die nachgiebige Formwerkzeughälfte (14) abzustutzen, eine Membrane (26), die Druck aus einer externen Quelle auf das Material überträgt, und ein Reservoir (20), welches das Material aufnimmt, wenn die Form nichtstarr gemacht wird, um das Auflegen, Formen und Entfernen des Verbundgegenstands zu erleichtern.

2. Vorrichtung nach Anspruch 1, dadurch gekennzeichnet, daß die elastomere Schicht eine Einrichtung hat zum akkuraten Festlegen von angeformten Versteifungs- und Verstärkungsdetails.

3. Vorrichtung nach Anspruch 1, dadurch gekennzeichnet, daß die elastomere Schicht aus einem Polyaramidgewebe besteht, welches mit einem Fluorelastomermaterial im wesentlichen getränkt ist.

4. Vorrichtung nach Anspruch 1, dadurch gekennzeichnet, daß das Material (22) ein fließfähiges Polymermedium ist.

5. Vorrichtung nach Anspruch 1, dadurch gekennzeichnet, daß die nachgiebige Formwerkzeughälfte (14) eine angeformte "O"-Ringdichtung (38) hat.

6. Harzspritzpreßvorrichtung nach Anspruch 1, gekennzeichnet durch eine nachgiebige Formwerkzeughälfte (14), deren Steifigkeit durch Druckbeaufschlagung hinter der Formwerkzeughälfte (14) durch das Material (22) verändert werden kann, wobei die Formwerkzeughälfte (14) die Formung und das Freigeben von komplexen Verbundgegenständen erleichtert, die sonst nach dem Aushärten auf dem Formwerkzeug verriegelt wären.

7. Harzspritzpreßvorrichtung nach Anspruch 1, gekennzeichnet durch eine nachgiebige Formwerkzeughälfte (14), die eine wegwerfbare, thermoplastische Auskleidung aufweist, wobei die Auskleidung flexibel wird, wenn sie während eines Aushärtevorganges erwärmt wird, und nach dem Aushärtevorgang weggeworfen werden kann.

8. Verfahren zum Harzspritzpressen von Verbundgegenständen unter Verwendung einer Formvorrichtung, dadurch gekennzeichnet, daß die Formvorrichtung eine nachgiebige Formwerkzeughälfte (14) aufweist, deren Steifigkeit durch Druckbeaufschlagung hinter der Formwerkzeughälfte (14) durch ein Material (22) verändert werden kann, welches in der Lage ist, Fluiddruck bereitzustellen, um die Formwerkzeughälfte (14) abzustützen, und gekennzeichnet durch die Schritte:
Aufbauen von Druck hinter der nachgiebigen Formwerkzeughälfte (14), um ein teilweise starres Gebilde vor dem Auflegen von Verstärkungen zu schaffen;
Schließen einer` starren Formwerkzeughälfte (12) über dernachgiebigen Formwerkzeughälfte (14);
Steigern des Druckes hinter der nachgiebigen Formwerkzeughälfte (14), um für eine starre Abstützung während des Harzspritzpreßvorganges zu sorgen; und
Abbauen des Druckes hinter der nachgiebigen Formwerkzeughälfte (14), nachdem der Gegenstand ausgehärtet worden ist, um das Entfernen des Gegenstands aus der Form zu erleichtern.

9. Verfahren nach Anspruch 8, dadurch gekennzeichnet, daß die Verbundgegenstände angeformte Verstärkungen haben und das Verstärkungsmaterial auf die nachgiebige Formwerkzeughälfte (14) vor dem Schließen der starren Formwerkzeughälfte (12) aufgebracht wird.

10. Verfahren nach Anspruch 8, dadurch gekennzeichnet, daß der Druck, der für die Abstützung der nachgiebigen Formwerkzeughälfte (14) während des Harzspritzpreßvorganges sorgt, im wesentlichen gleich dem Druck des eingespritzten Harzes ist.

## Revendications

1. Un appareil de moulage par transfert de résine pour fabriquer un article composite renforcé par des fibres comprenant:
deux moitiés de moule (12,14) appariées le long d'une surface d'étanchéité pour former, de ce fait, une cavité de moule définissant les surfaces d'un article composite complexe renforcé par des fibres, caractérisé par une desdites moitiés de moule (14) servant à l'empilement, sur cette dernière, de fibres de renforcement, cette moitié de moule en question (14) étant un dispositif souple et de rigidité variable comprenant une couche élastomère s'appariant essentiellement à la forme souhaitée dudit article; et
un moyen (20,22,26) pour transmettre une pression du fluide pour supporter ladite moitié de moule souple (14), ledit moyen (20,22,26) comprenant un matériau (22) capable de fournir une pression de fluide sur l'arrière dudit moule souple (14) pour supporter la moitié de moule souple (14), un diaphragme (26) qui transmet une pression issue d'une source externe audit matériau et un réservoir (20) qui stocke ledit matériau quand ledit moule est fabriqué non rigide pour faciliter l'empilement, le moulage et l'enlèvement de l'article composite.

2. L'appareil de la revendication 1 caractérisé en ce que la couche élastomère comprend un moyen pour loger précisement des détails raidisseurs et de renforcement moulés intégralement.

3. L'appareil de la revendication 1 caractérisé en ce que la couche élastomère est composée d'un tissu de polyaramide essentiellement imprégné d'un matériau élastomère fluoré.

4. L'appareil de la revendication 1 caractérise en ce que ledit matériau (22) est un milieu polymère fluide.

5. L'appareil de la revendication 1 caractérisé en ce que la moitié de moule souple (14) comprend un joint torique d'étanchéité moulé intégralement (38).

6. Un appareil de moulage par transfert de résine conformément à la revendication 1, caractérisé en ce qu'il comprend une moitié de moule souple (14) dont la rigidité peut être modifiée par l'application d'une pression sur l'arrière de ladite moitié de moule (14) par ledit matériau (22), ladite moitié de moule (14) facilitant le moulage et la libération d'articles composites complexes qui seraient autrement emprisonnés dans le moule après le durcissement.

7. Un appareil de moulage par transfert de résine conformément à la revendication 1, caractérisé en ce qu'il comprend une moitié de moule souple (14) qui est composée d'une chemise thermoplastique à usage unique, ladite chemise devenant flexible quand elle est chauffée lors d'une opération de durcissement et qui peut être jetée après l'opération de durcissement.

8. Une méthode pour le moulage par transfert de résine d'articles composites, utilisant un appareil de moulage, caractérisée en ce que ledit appareil de moulage comprend une moitié de moule souple (14) dont la rigidité peut être modifiée par l'application d'une pression sur l'arrière de ladite moitié de moule (14) par un matériau (22) capable de fournir une pression de fluide pour supporter la moitié de moule souple (14) et caractérisée en ce qu'elle comprend les étapes de:
fournir une pression sur l'arrière de ladite moitié de moule souple (14) pour fournir une structure partiellement rigide avant l'empilement des renforcements;
fermer une moitié de moule rigide (12) sur ladite moitié de moule souple (14);
augmenter le pression sur l'arrière de ladite moitié de moule souple (14) pour fournir un support rigide lors du procédé de moulage de la résine;
et diminuer la pression sur l'arrière de ladite moitié de moule souple (14) après que l'article ait été durci pour faciliter l'enlèvement de la pièce à partir du moule.

9. La méthode de la revendication 8, caractérisée en ce que les articles composites comportent des renforcements moulés intégralement et le matériau de renforcement est placé sur ladite moitié de moule souple (14) avant de fermer la moitié de moule rigide (12).

10. La méthode de la revendication 8, caractérisée en ce que la pression, servant à fournir un support à la moitié de moule souple (14) lors du procédé de moulage de résine, est essentiellement la même que la pression de la résine injectée.
